# EUROPÄISCHE PATENTSCHRIFT

(11) **EP 1 529 692 B1**
(45) Veröffentlichungstag und Bekanntmachung des Hinweises auf die Patenterteilung: **13.12.2017**
(21) Anmeldenummer: 03103817.7
(22) Anmeldetag: 15.10.2003
(51) Int. Cl.: B60R 16/02, H02J 7/14, H02J 1/00

(54) **Verfahren und Vorrichtung zur Steuerung der Spannungsversorgung in einem Kraftfahrzeug-Bordnetz**
Method and device for controlling voltage supply in a vehicle electric system
Procédé et dispositif pour commander l'alimentation de tension dans un réseau de bord d'automobile

(43) Veröffentlichungstag der Anmeldung: 11.05.2005
(73) Patentinhaber: Ford Global Technologies, LLC, A subsidary of Ford Motor Company, Dearborn, MI 48126 (US)
(72) Erfinder: Gaedt, Lutz Peter, 52499, Baesweiler (DE); Kok, Daniel Benjamin, 6343 CA, Klimmen (NL); Leyten, Max Johan Adriaan, 6291EM, Vaals (NL)
(74) Vertreter: Illing, Rolf

(56) Entgegenhaltungen:
- DE-A1- 4 307 907
- DE-A1- 10 041 015
- US-A- 4 451 774
- US-A- 5 426 589

## Beschreibung

Die Erfindung betrifft ein Verfahren und eine Vorrichtung zur Steuerung der Spannungsversorgung in einem Kraftfahrzeug-Bordnetz gemäß Anspruch 1 bzw. 9.

Das Bordnetz eines Kraftfahrzeuges hat die Aufgabe, die elektrische Energieversorgung von im Fahrzeug vorhandenen elektrischen Verbrauchern sicherzustellen. Es umfaßt grundsätzlich einen Energiespeicher (Batterie), einen Energiewandler (Generator) und Energieverbraucher (elektrische/elektronische Geräte).

Aufgrund des ständig zunehmenden Anteils an Elektronik und Elektrik in Kraftfahrzeugen müssen Bordnetze, insbesondere die Energiespeicher und -wandler in Zukunft wesentlich höhere Belastungen als bisher verkraften. Vor allem wird es zu erhöhten Spitzenbelastungen aufgrund der vielen an- und abschaltbaren elektrischen Komponenten kommen, die in Folge einer erweiterten elektrischen Ausstattung in Kraftfahrzeugen eingesetzt werden, wie z. B. Komfortmerkmale, eine Elektrifizierung der Kraftübertragung, X by wire Systeme, etc..

Im Allgemeinen wird die elektrische Spannung eines Bordnetzes im Wesentlichen durch die im Kraftfahrzeug installierte Batterie bestimmt. Daher variiert die Spannung des Bordnetzes abhängig vom Ladezustand der Batterie, von der Batterietemperatur und dem Batterie-Lade- oder Entladestrom.

Der Pegel der Spannung des Bordnetzes kann insbesondere in zwei Fällen von der Generatorspannung (Batterieladespannung) auf die Batterieentladespannung fallen:
1. Unter Spitzenlastbedingungen, in denen die Lastanforderung im Bordnetz die Generatorkapazität übersteigt, also, beispielsweise wenn elektrische Verbraucher einen besonders großen elektrischen Leistungsbedarf in Folge eines bestimmten Betriebszustandes haben oder wenn besonders viele elektrische Verbraucher etwa zur gleichen Zeit aktiviert werden;
2. bei unmittelbaren Leistungsanforderungen, bei denen der Generator nicht schnell genug Leistung zur Verfügung stellen kann. Dieser Spannungsabfall liegt in der Regel in einer Größenordnung von etwa 1 bis etwa 4 V und kann zu Fehlfunktionen elektrischer Verbraucher führen, die möglicherweise von Kraftfahrzeuginsassen bemerkt werden. Auch das Laden einer Batterie mit Spitzenleistung während regenerativen Bremsens kann Spannungsschwankungen im Bordnetz erzeugen.

Derartige Spannungsschwankungen im Bordnetz können bei verschiedenen elektrischen Verbrauchern wie beispielsweise der Beleuchtung, der Armaturenbrettbeleuchtung und bei (Innenraum-) Lüftern zu Veränderungen in der Funktion oder gar zu Funktionsstörungen führen. Beispielsweise ist es bekannt, daß die Lebensdauer von Glühlampen von der Toleranz der Versorgungsspannung abhängt. Um zu vermeiden, daß diese Schwankungen zu Degenerationseffekten führen, wird in Bordnetzen in Kraftfahrzeugen in der Regel eine lokale oder eine zentrale DC/DC-Wandler- oder Filterelektronik eingebaut, die eine stabile Spannungsversorgung auch unter den oben erläuterten Bedingungen gewährleisten soll.

Aus der DE 197 45 849 A1 ist eine Einrichtung zur Energieverteilung in einem Kraftfahrzeug bekannt, mit der sichergestellt wird, daß die elektrische Spannung des Bordnetzes nur innerhalb vorgebbarer Grenzen schwanken kann. Um zu verhindern, daß Spannungsschwankungen von Kraftfahrzeuginsassen wahrgenommen werden, müssen jedoch bei dieser bekannten Einrichtung die vorgebbaren Grenzen derart eingestellt werden, daß die erlaubten Schwankungen nicht bemerkbar sind, beispielsweise als Flackern der Innenraumbeleuchtung oder als Temperaturschwankungen der Klimaanlage. Eng vorgegebene Grenzen bewirken allerdings eine geringe Toleranz gegenüber Schwankungen und erfordern daher eine entsprechend aufwendig dimensionierte Energieversorgung.

Aus der DE 100 41 015 A1 ist ein Verfahren zur Regelung der Ausgangsspannung eines Generators bekannt, der für ein Kraftfahrzeug eingesetzt wird. Dabei soll der Schadstoffausstoß zeitweise dadurch verringert werden, daß die Ausgangsspannung des Generators verringert wird, wobei der vom Generator gelieferte Strom durch Strom von einer Batterie ergänzt wird, um die ausreichende Versorgungsspannung der Verbraucher zu gewährleisten. Eine direkte Begrenzung der zulässigen Schwankung der Versorgungsspannung findet nicht statt.

Der vorliegenden Erfindung liegt daher die Aufgabe zu Grunde, ein Verfahren und eine Vorrichtung zur Steuerung der Spannungsversorgung in einem Kraftfahrzeug-Bordnetz vorzuschlagen, die Schwankungen der elektrischen Versorgungsspannung des Bordnetzes derart ermöglichen, daß diese von Kraftfahrzeuginsassen kaum oder sogar überhaupt nicht wahrnehmbar sind.

Diese Aufgabe wird durch ein Verfahren und eine Vorrichtung zur Steuerung der Spannungsversorgung in einem Kraftfahrzeug-Bordnetz mit den Merkmalen gemäß Anspruch 1 bzw. 9 gelöst. Weitergehende Ausgestaltungen der Erfindung ergeben sich aus den abhängigen Ansprüchen.

Ein wesentlicher Gedanke der Erfindung besteht darin, Betriebsbedingungen eines Kraftfahrzeuges, d. h. insbesondere Betriebsbedingungen der Elektrik und Elektronik des Kraftfahrzeuges zu erkennen, bei denen die funktionelle Degeneration von empfindlichen elektrischen Verbrauchern infolge von Spannungsschwankungen nicht oder wenigstens kaum von den Fahrzeuginsassen bemerkt wird. Beispielsweise können abblendende Scheinwerfer unter Tageslichtbedingungen erlaubt sein, während dies bei Nacht nicht tolerierbar ist. Abhängig von der oder den erkannten Betriebsbedingung(en) soll die Spannungsversorgung im Bordnetz des Kraftfahrzeuges gesteuert werden. Damit können Schwankungen der elektrischen Versorgungsspannung in einem Bordnetz eines Kraftfahrzeugs rechtzeitig erkannt und es kann entsprechend darauf reagiert werden.

Die Erfindung betrifft nun ein Verfahren zur Steuerung der Spannungsversorgung in einem Kraftfahrzeug-Bordnetz, bei dem eine obere und/oder untere Grenze der Versorgungsspannung des Bordnetzes abhängig von mindestens einer Betriebsbedingung des Kraftfahrzeugs eingestellt wird. Mit anderen Worten wird also ein Fenster für eine Spannungsschwankung der Versorgungsspannung im Bordnetz dynamisch abhängig von mindestens einer Betriebsbedingung eingestellt, insbesondere derart, daß ein Kraftfahrzeuginsasse eine Spannungsschwankung nicht bemerkt. Unter einer Betriebsbedingung wird hierbei beispielsweise verstanden, welche elektrischen Verbraucher aktiviert sind und welche Umgebungsbedingungen (z. B. Tag, Nacht, Regen, Sonne, Wind) vorherrschen. Diese Betriebsbedingungen sollen automatisch erfaßbar und erkennbar sein.

In einer bevorzugten Ausführungsform wird ferner die Dauer eines Spannungsanstiegs und/oder -abfalls der Versorgungsspannung abhängig von mindestens einer Betriebsbedingung des Kraftfahrzeugs eingestellt. Damit kann also nicht nur ein Fenster für eine mögliche Spannungsschwankung im Bordnetz, sondern auch die Anstiegs- und Abfallzeit (Ramp-Up- bzw. Ramp-Down-Time) einer Spannungsschwankung dynamisch vorgegeben werden. Die Auswirkungen einer Spannungsschwankung auf elektrische Verbraucher werden dadurch reduziert. Beispielsweise wird bei Nacht eine langsame Abnahme der Helligkeit einer Armaturenbrettbeleuchtung aufgrund einer langsamen Abnahme der Versorgungsspannung von einem Kraftfahrzeugführer als weniger störend als eine plötzliche Helligkeitsabnahme bei einer abrupten Spannungsschwankung empfunden. Dagegen wird die plötzliche Helligkeitsabnahme bei Tageslicht vom Kraftfahrzeugführer kaum bemerkt werden. Daher sollte zum Beispiel bei Nacht einer größere Anstiegs- und Abfallzeit einer Spannungsschwankung der Versorgungsspannung im Bordnetz als bei Tag eingestellt werden.

Insbesondere wird die mindestens eine Betriebsbedingung festgestellt, indem mindestens ein Sensorsignal ausgewertet wird. In modernen Kraftfahrzeugen wird mittlerweile eine Vielzahl von Sensoren eingesetzt, die sich nahezu alle prinzipiell für die Erkennung einer Betriebsbedingung des Kraftfahrzeugs im Sinne der Erfindung eignen.

Das mindestens eine Sensorsignal kann beispielsweise von einem Lichtsensor, einem Regensensor, einer Uhr, einem Zeitzonen-Lichtschalter, einem Fahrzeuggeschwindigkeitssensor, einem Lüfter, von Audioeinstellungen, von elektrischen Fensterhebern oder dergleichen elektrischen Verbrauchern des Kraftfahrzeugs erzeugt werden. Die Signale derartiger Sensoren haben sich als besonders geeignet zum Erkennen einer Betriebsbedingung herausgestellt, da fast alle Informationen über die Umgebungsbedingungen des Kraftfahrzeugs und seiner Insassen (Temperatur, Helligkeit, Regen, Uhrzeit, Geräuschpegel im Fahrzeuginnenraum) liefern.

Vorzugsweise wird abhängig vom mindestens einen Sensorsignal die obere und/oder untere Grenze der Versorgungsspannung und/oder die Dauer eines Spannungsanstiegs und/oder -abfalls der Versorgungsspannung ermittelt.

In modernen Kraftfahrzeugen ist mittlerweile immer häufiger eine elektrische Energieverwaltung vorgesehen, die dann die obere und/oder untere Grenze der Versorgungsspannung und/oder die Dauer eines Spannungsanstiegs und/oder - abfalls der Versorgungsspannung verarbeiten kann, indem sie eine Energieversorgungsverwaltung und eine Energieverteilungsverwaltung im Bordnetz durchführt.

Die Energieversorgungsverwaltung kann Sollwerte für Strom und Spannung mindestens eines Generators des Kraftfahrzeugs einstellen. Diese Sollwerte werden insbesondere der Steuerelektronik einer Spannungsregelung im Bordnetz zur Verfügung gestellt, welche die Sollwerte verarbeitet, indem sie die Bordnetz- bzw. Versorgungsspannung auf entsprechende Werte einstellt.

Die Energieverteilungsverwaltung kann einstellen, welche elektrischen Verbraucher aktiviert werden können, insbesondere kann sie eine Priorisierung derart vornehmen, daß Verbraucher mit hoher Priorität wie z. B. das Scheinwerferlicht und die Armaturenbeleuchtung bei Nacht unter allen Betriebsbedingungen aktivierbar sind, während Verbraucher mit einer niedrigen Priorität bei bestimmten Betriebsbedingungen nicht aktiviert werden können wie beispielsweise eine Endstufe zur Verstärkung von Audiosignalen. Die Energieverteilungsverwaltung kann auch eine feinere Abstufung bei der Aktivierung der Verbraucher vornehmen, beispielsweise kann sie den Stromverbrauch von bestimmten Verbrauchern einschränken. Denkbar ist beispielsweise, daß die erwähnte Endstufe zwar aktiviert werden kann, deren Leistungsaufnahme allerdings von der Energieverteilungsverwaltung begrenzt wird.

Ferner betrifft die Erfindung eine Vorrichtung zur Steuerung der Spannungsversorgung in einem Kraftfahrzeug-Bordnetz, mit einer Steuereinheit, die ausgebildet ist, um eine obere und/oder untere Grenze der Versorgungsspannung des Bordnetzes abhängig von mindestens einer Betriebsbedingung des Kraftfahrzeugs einzustellen. Die Steuereinheit kann beispielsweise im elektrischen Energiemanagementsystem (EEMS) enthalten sein, insbesondere als embedded Software, die von einem leistungsfähigen Mikroprozessor ausgeführt wird. Denkbar ist aber auch die Implementierung in Form einer speziellen integrierten Schaltung wie z. B. einen Mikrokontroller mit Speicher, in dem die Steuereinheit als Programm abgelegt ist.

Vorzugsweise ist die Steuereinheit ferner ausgebildet, um die Dauer eines Spannungsanstiegs und/oder -abfalls der Versorgungsspannung abhängig von mindestens einer Betriebsbedingung des Kraftfahrzeugs einzustellen. Insbesondere verarbeitet die Steuereinheit Eingangssignale, die Rückschlüsse auf die Betriebsbedingung des Kraftfahrzeugs zulassen und erzeugt Ausgangssignale für die entsprechende Einstellung der Versorgungsspannung, also insbesondere Steuersignale für die Spannungsreglerelektronik des Generators des Kraftfahrzeugs.

Insbesondere ist die Steuereinheit zum Empfangen und Auswerten mindestens eines Sensorsignals ausgebildet, um die mindestens eine Betriebsbedingung festzustellen. Wie bereits erwähnt, eignen sich Sensorsignale besonders gut als Eingangssignale zum Erkennen einer Betriebsbedingung des Kraftfahrzeugs, da sie direkte oder indirekte Rückschlüsse auf die Betriebsbedingung des Kraftfahrzeugs zulassen.

Das mindestens eine Sensorsignal kann ein Signal eines Lichtsensors, eines Regensensors, einer Uhr, eines Zeitzonen-Lichtschalters, eines Fahrzeuggeschwindigkeitssensors, eines Lüfters, einer Audioeinheit, von elektrischen Fensterhebern oder dergleichen elektrischen Verbrauchern des Kraftfahrzeugs sein. Es werden also bevorzugt Signale von in vielen modernen Kraftfahrzeugen bereits enthaltenen Sensoren für die Erkennung einer Betriebsbedingung herangezogen. Dadurch sind keine zusätzlichen Sensoren erforderlich, die ausschließlich für die Betriebsbedingungserkennung vorgesehen sind und zusätzliche Kosten verursachen würden.

Die Steuereinheit ist vorzugsweise ausgebildet, um abhängig vom mindestens einen Sensorsignal die obere und/oder untere Grenze der Versorgungsspannung und/oder die Dauer eines Spannungsanstiegs und/oder -abfalls der Versorgungsspannung zu ermitteln. Beispielsweise kann die Steuereinheit zum Ausführen eines entsprechenden Algorithmus ausgebildet sein, der wiederum zur Ermittlung der vorerwähnten Größen ausgebildet ist.

Insbesondere ist die Steuereinheit mit einer elektrischen Energieverwaltungseinheit des Kraftfahrzeugs kommunikationsmäßig verbunden, welche die obere und/oder untere Grenze der Versorgungsspannung und/oder die Dauer eines Spannungsanstiegs und/oder -abfalls der Versorgungsspannung verarbeitet, indem sie eine Energieversorgungsverwaltungs- und eine Energieverteilungsverwaltungseinheit ansteuert.

Die Energieversorgungsverwaltungseinheit ist vorzugsweise ausgebildet, um abhängig von Signalen der elektrischen Energieverwaltungseinheit Sollwerte für Strom und Spannung mindestens eines Generators des Kraftfahrzeugs einzustellen.

Die Energieverteilungsverwaltungseinheit ist vorzugsweise ausgebildet, um abhängig von Signalen der elektrischen Energieverwaltungseinheit einzustellen, welche elektrischen Verbraucher aktiviert werden können.

Schließlich betrifft die Erfindung ein Kraftfahrzeug mit der erfindungsgemäßen Vorrichtung.

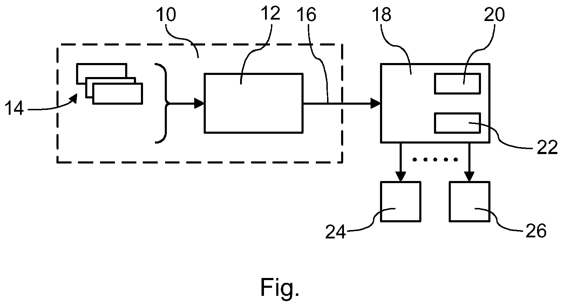

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel.

In der Beschreibung, in den Ansprüchen, in der Zusammenfassung und in der einzigen Zeichnung werden die in der hinten angeführten Liste der Bezugszeichen verwendeten Begriffe und zugeordneten Bezugszeichen verwendet.

Die einzige Zeichnung zeigt ein Ausführungsbeispiel einer Vorrichtung zur Steuerung der Spannungsversorgung in einem Kraftfahrzeug-Bordnetz gemäß der Erfindung.

Eine Steuereinheit 10 der Vorrichtung umfaßt einen Steueralgorithmus 12, der auch als Spannungsschwankungserkennungsalgorithmus bezeichnet werden kann, zum Quantifizieren und dynamischen Einstellen der Grenzen für Spannungsschwankungen auf einem Fahrzeug-Energieversorgungsnetz bzw. - Bordnetz. Der Algorithmus kann durch einen Mikrorechner und einen Speicher mit einem entsprechenden Programm realisiert werden.

In der Fig. sind die Eingaben und Ausgaben des Steueralgorithmus 12 dargestellt. Hierbei wird von einer bestimmten Anzahl von verfügbaren On-Board und Off-Board (beispielsweise Telematikdienste) Sensorinformationen 14 ausgegangen. Derartige Sensorinformationen können beispielsweise von einem Lichtsensor, Regensensor, Zeitzonen-Lichtschalter, Gebläse- oder Innenraum-Lüfterschalter stammen oder Fensterhebereinstellungen (offen/geschlossen), Audioeinstellungen, die Fahrzeuggeschwindigkeit oder die Uhrzeit und das Datum sein.

Anhand dieser Sensorinformationen 14 ermittelt der Steueralgorithmus 12 Betriebsbedingungen des Kraftfahrzeugs zur Erkennung von Spannungsschwankungsgrenzen, beispielsweise eine Tag- oder Nachtfahrt, eine Fahrt bei Regen oder Sonne (hohe Außentemperaturen).

Der Steueralgorithmus 12 erzeugt Begrenzungen der Spannungsschwankungen auf dem Energieversorgungsnetz, was irgendeine Kombination der absoluten Maximalspannung, absoluten Minimalspannung (also insbesondere des Schwankungs-Fensters), absoluten Spannungsschwankung über die Zeit (dV/dt), sowohl positiv als auch negativ (also insbesondere der Dauer von Spannungsanstiegs- und -abfallzeit), maximaler unmittelbarer und relativer Spannungssprung (also insbesondere des Betrags einer Spannungsänderung), sowohl positiv als auch negativ sein kann.

Die Spannungsgrenzen werden als Ausgangssignale 16 des Steueralgorithmus 12 an eine zentrale oder dezentrale Energieverwaltungseinheit 18 in Form eines Energieverwaltungskontrollers des Fahrzeugs kommuniziert. Die Energieverwaltungseinheit 18 umfaßt eine Energieversorgungsverwaltungseinheit 20 (PSM: Power Supply Management) und eine Energieverteilungsverwaltungseinheit 22 (PDM: Power Distribution Management).

Ein PSM-Algorithmus der Energieversorgungsverwaltungseinheit 20 erzeugt Sollwerte (Spannung, Strom) für einen Generator des Kraftfahrzeugs abhängig von empfangenen Spannungsschwankungseinschränkungen des Steueralgorithmus 12. Beispielsweise werden die Spannungsanstiegszeit des Generators an die zulässige maximale dV/dt-Rate und die maximale und/oder minimale Generatorspannung an die obere und untere Grenze der Versorgungsspannung angepaßt.

Ein PDM-Algorithmus der Energieverteilungsverwaltungseinheit 22 entscheidet, welcher der elektrischen Verbraucher 24 und 26 Leistung anfordern darf. Lastpriorisierung ist ein Teil des PDM-Algorithmus. Der PDM-Algorithmus kann entscheiden, die Energieversorgungsnetz- bzw. Bordnetzlast zu begrenzen, so daß die Energieversorgungsnetz- bzw. Bordnetzspannungsschwankung innerhalb der Grenzen bleibt, wie sie durch den Steueralgorithmus 12 eingestellt werden.

Im Folgenden werden zwei Situationen und das daraus resultierende Verhalten des Steueralgorithmus 12 beschrieben:
1. Spannungsschwankungen sollen in der folgenden Situation nicht oder nur in sehr geringem Ausmaß toleriert werden. Dementsprechend muß der Steueralgorithmus 12 die obere und/oder untere Grenze der Versorgungsspannung sehr nahe beieinander liegend, also das Spannungsschwankungsfenster sehr schmal einstellen, so daß nur geringe oder besser überhaupt keine Spannungsschwankungen auftreten können.

Die Situation wird nun kurz geschildert: Ein Kraftfahrzeug wird mit einer relativ geringen und etwa konstanten Geschwindigkeit von 80 km/h bei geringem Wind und schwachen Straßengeräuschen über eine leere Landstraße bei Nacht gefahren. Alle Fenster des Fahrzeugs sind geschlossen, das Radio ist abgeschaltet, und ein Innenraum-Lüfter ist auf Stufe 2 geschaltet.

In dieser Situation bemerkt ein Kraftfahrzeugführer sofort Spannungsschwankungen, da bei Nacht Helligkeitsschwankungen der Beleuchtung und bei einem niedrigen Lärmpegel Änderungen des Lüfters ebenfalls in der Regel leicht wahrgenommen werden. Daher muß der Steueralgorithmus 12 insbesondere durch Auswerten der Signale des Lichtsensors, der Audioeinstellungen, der Einstellung des Innenraum-Lüfters und der Fenster sowie der Fahrzeuggeschwindigkeit die Betriebsbedingung des Kraftfahrzeugs feststellen und Spannungsschwankungen durch entsprechendes Einstellen der Energieverwaltungseinheit 18 auf ein Minimum begrenzen oder gar ganz unterdrücken. Dies kann dadurch erfolgen, daß die Sollwerte für Spannung und Strom von der Energieversorgungsverwaltungseinheit 20 auf eng tolerierte Werte gesetzt werden, und daß die Energieverteilungsverwaltungseinheit 22 die elektrischen Verbraucher 24, 26 derart steuert, daß insbesondere durch Anschalten zusätzlicher elektrischer Verbraucher die Versorgungsspannung nicht schwankt, d.h. der Generator nicht zu stark belastet wird.
2. In der folgenden Situation sind Spannungsschwankungen tolerierbar, aber nur bis zu einem bestimmten Grad. Dementsprechend kann der Steueralgorithmus 12 die obere und/oder untere Grenze der Versorgungsspannung großzügiger, d.h. das Spannungsschwankungsfenster breiter als in der ersten Situation einstellen.

Die Situation ist wie folgt: Ein Kraftfahrzeug wird tagsüber auf der Autobahn mit hoher Geschwindigkeit gefahren. Da die Außentemperatur sehr hoch ist, sind die beiden vorderen Seitenfenster des Fahrzeugs geöffnet, der Innenraum-Lüfter ist abgeschaltet.

Da Änderungen der Lichtintensität außerhalb und innerhalb des Fahrzeugs bei Tageslicht nicht oder zumindest kaum bemerkt werden, die Fenster des Fahrzeugs geöffnet sind und der Innenraum-Lüfter abgeschaltet ist, können relativ große Spannungsschwankungen toleriert werden, da ein Kraftfahrzeugführer Helligkeitsänderungen der Beleuchtung und aufgrund der geöffneten Fenster und des Fahrtwindes auch Temperaturschwankungen nicht oder zumindest kaum wahrnehmen kann.

Daher kann der Steueralgorithmus 12 Spannungsschwankungen durch entsprechendes Einstellen der Energieverwaltungseinheit 18 auf einen oberen und unteren Grenzwert begrenzen. Dies kann dadurch erfolgen, daß die Sollwerte für Spannung und Strom von der Energieversorgungsverwaltungseinheit 20 auf etwas großzügiger tolerierte Werte als bei der ersten Situation gesetzt werden und daß die Energieverteilungsverwaltungseinheit 22 das An- und Abschalten elektrischer Verbraucher 24, 26 zuläßt, solange die Versorgungsspannung unterhalb des oberen und oberhalb des unteren Grenzwertes bleibt.

### Bezugszeichen

10 Steuereinheit
12 Steueralgorithmus
14 Sensorinformationen bzw. -signale
16 Ausgabesignale des Steueralgorithmus 12
18 Energieverwaltungseinheit
20 Energieversorgungsverwaltungseinheit
22 Energieverteilungsverwaltungseinheit
24, 26 elektrische Verbraucher

## Patentansprüche

1. Verfahren zur Steuerung einer Versorgungsspannung, die zwischen einer oberen Grenze und einer unteren Grenze schwankt, in einem Kraftfahrzeug-Bordnetz,
**dadurch gekennzeichnet, dass**
die obere und/oder untere Grenze der Versorgungsspannung des Bordnetzes abhängig von mindestens einer Betriebsbedingung des Kraftfahrzeugs dadurch eingestellt wird, dass der Stromverbrauch von mindestens einem Verbraucher begrenzt wird.

2. Verfahren nach Anspruch 1,
**dadurch gekennzeichnet, dass**
ferner die Dauer eines Spannungsanstiegs und/oder -abfalls der Versorgungsspannung abhängig von mindestens einer Betriebsbedingung des Kraftfahrzeugs eingestellt wird.

3. Verfahren nach Anspruch 1 oder 2,
**dadurch gekennzeichnet, dass**
die mindestens eine Betriebsbedingung festgestellt wird, indem mindestens ein Sensorsignal (14) ausgewertet wird.

4. Verfahren nach Anspruch 3,
**dadurch gekennzeichnet, dass**
das mindestens eine Sensorsignal (14) von einem Lichtsensor, einem Regensensor, einer Uhr, einem Zeitzonen-Lichtschalter, einem Fahrzeuggeschwindigkeitssensor, einem Lüfter, von Audioeinstellungen, von elektrischen Fensterhebern oder dergleichen elektrischen Verbrauchern des Kraftfahrzeugs erzeugt wird.

5. Verfahren nach Anspruch 3 oder 4,
**dadurch gekennzeichnet, dass**
abhängig vom mindestens einen Sensorsignal (14) die obere und/oder untere Grenze der Versorgungsspannung und/oder die Dauer eines Spannungsanstiegs und/oder -abfalls der Versorgungsspannung ermittelt wird.

6. Verfahren nach Anspruch 5,
**dadurch gekennzeichnet, dass**
eine elektrische Energieverwaltung (18) des Kraftfahrzeugs die obere und/oder untere Grenze der Versorgungsspannung und/oder die Dauer eines Spannungsanstiegs und/oder -abfalls der Versorgungsspannung verarbeitet, indem sie eine Energieversorgungsverwaltung (20) und eine Energieverteilungsverwaltung (22) im Bordnetz durchführt.

7. Verfahren nach Anspruch 6,
**dadurch gekennzeichnet, dass**
die Energieversorgungsverwaltung (20) Sollwerte für Strom und Spannung mindestens eines Generators des Kraftfahrzeugs einstellt.

8. Verfahren nach Anspruch 6 oder 7,
**dadurch gekennzeichnet, dass**
die Energieverteilungsverwaltung (22) einstellt, welche elektrischen Verbraucher (24, 26) aktiviert werden können.

9. Vorrichtung zur Steuerung einer Versorgungsspannung, die zwischen einer oberen Grenze und einer unteren Grenze schwankt mit einer Steuerungseinheit (10), in einem Kraftfahrzeug-Bordnetz,
**dadurch gekennzeichnet, dass**
die Steuereinheit (10) derart ausgebildet ist, dass sie
die obere und/oder untere Grenze der Versorgungsspannung des Bordnetzes abhängig von mindestens einer Betriebsbedingung des Kraftfahrzeugs dadurch eingestellt wird, dass der Stromverbrauch von mindestens einem Verbraucher begrenzt wird.

10. Vorrichtung nach Anspruch 9,
**dadurch gekennzeichnet, dass**
die Steuereinheit (10) ferner ausgebildet ist, um die Dauer eines Spannungsanstiegs und/oder -abfalls der Versorgungsspannung abhängig von mindestens einer Betriebsbedingung des Kraftfahrzeugs einzustellen.

11. Vorrichtung nach Anspruch 9 oder 10,
**dadurch gekennzeichnet, dass**
die Steuereinheit (10) zum Empfangen und Auswerten mindestens eines Sensorsignals (14) ausgebildet ist, um die mindestens eine Betriebsbedingung festzustellen.

12. Vorrichtung nach Anspruch 11,
**dadurch gekennzeichnet, dass**
das mindestens eine Sensorsignal (14) ein Signal eines Lichtsensors, eines Regensensors, einer Uhr, eines Zeitzonen-Lichtschalters, eines Fahrzeuggeschwindigkeitssensors, eines Lüfters, einer Audioeinheit, von elektrischen Fensterhebern oder dergleichen elektrischen Verbrauchern des Kraftfahrzeugs ist.

13. Vorrichtung nach Anspruch 11 oder 12,
**dadurch gekennzeichnet, dass**
die Steuereinheit (10) ausgebildet ist, um abhängig vom mindestens einen Sensorsignal (14) die obere und/oder untere Grenze der Versorgungsspannung und/oder die Dauer eines Spannungsanstiegs und/oder -abfalls der Versorgungsspannung zu ermitteln.

14. Vorrichtung nach Anspruch 13,
**dadurch gekennzeichnet, dass**
die Steuereinheit (10) mit einer elektrischen Energieverwaltungseinheit (18) des Kraftfahrzeugs kommunikationsmäßig verbunden ist, welche die obere und/oder untere Grenze der Versorgungsspannung und/oder die Dauer eines Spannungsanstiegs und/oder -abfalls der Versorgungsspannung verarbeitet, indem sie eine Energieversorgungsverwaltungs- und eine Energieverteilungsverwaltungseinheit (20,22) ansteuert.

15. Vorrichtung nach Anspruch 14,
**dadurch gekennzeichnet, dass**
die Energieversorgungsverwaltungseinheit (20) ausgebildet ist, um abhängig von Signalen (16) der elektrischen Energieverwaltungseinheit (18) Sollwerte für Strom und Spannung mindestens eines Generators des Kraftfahrzeugs einzustellen.

16. Vorrichtung nach Anspruch 14 oder 15,
**dadurch gekennzeichnet, dass**
die Energieverteilungsverwaltungseinheit (22) ausgebildet ist, um abhängig von Signalen (16) der elektrischen Energieverwaltungseinheit (18) einzustellen, welche elektrischen Verbraucher (24, 26) aktiviert werden können.

17. Kraftfahrzeug mit einer Vorrichtung nach einem der Ansprüche 9 bis 16.

## Claims

1. Method for controlling a supply voltage, which fluctuates between an upper limit and a lower limit, in a motor vehicle on-board power system,
**characterized in that** the upper and/or lower limit of the supply voltage of the on-board power system is set as a function of at least one operating condition of the motor vehicle **in that** the current consumption by at least one consumer is limited.

2. Method according to Claim 1,
**characterized in that**,
in addition, the duration of a rise and/or drop in the supply voltage is set as a function of at least one operating condition of the motor vehicle.

3. Method according to Claim 1 or 2,
**characterized in that**
the at least one operating condition is determined by evaluating at least one sensor signal (14).

4. Method according to Claim 3,
**characterized in that**
the at least one sensor signal (14) is generated by a light sensor, a rain sensor, a clock, a time zone light switch, a vehicle velocity sensor and/or a fan, by audio settings, by electric window lifters or such electrical loads of the vehicle.

5. Method according to Claim 3 or 4,
**characterized in that**
the upper and/or lower limit of the supply voltage and/or the duration of a rise and/or drop in the supply voltage are determined as a function of at least one sensor signal (14).

6. Method according to Claim 5,
**characterized in that**
an electrical energy management system (18) of the motor vehicle processes the upper and/or lower limit of the supply voltage and/or the duration of a rise and/or drop in the supply voltage by carrying out an energy supply management process (20) and an energy distribution management process (22) in the on-board power system.

7. Method according to Claim 6,
**characterized in that**
the energy supply management process (20) sets setpoint values for the current and voltage of at least one generator of the motor vehicle.

8. Method according to Claim 6 or 7,
**characterized in that**
the energy distribution management process (22) sets which electrical loads (24, 26) can be activated.

9. Device for controlling a supply voltage, which fluctuates between an upper limit and a lower limit, having a control unit (10), in a motor vehicle on-board power system,
**characterized in that** the control unit (10) is embodied in such a way that the upper and/or lower limit of the supply voltage of the on-board power system is set as a function of at least one operating condition of the motor vehicle **in that** the current consumption by at least one consumer is limited.

10. Device according to Claim 9,
**characterized in that**
the control unit (10) is also designed to set the duration of a rise and/or drop in the supply voltage as a function of at least one operating condition of the motor vehicle.

11. Device according to Claim 9 or 10,
**characterized in that**
the control unit (10) is designed to receive and evaluate at least one sensor signal (14) in order to determine the at least one operating condition.

12. Device according to Claim 11,
**characterized in that**
the at least one sensor signal (14) is a signal of a light sensors, of a rain sensor, of a clock, of a time zone light switch, of a vehicle velocity sensor, of a fan, of an audio unit, of electrical window lifters or such electrical loads of the motor vehicle.

13. Device according to Claim 11 or 12,
**characterized in that**
the control unit (10) is designed to determine the upper and/or lower limit of the supply voltage and/or the duration of a rise and/or drop in the supply voltage as a function of the at least one sensor signal (14) .

14. Device according to Claim 13,
**characterized in that**
the control unit (10) is connected to an electrical energy management unit (18) of the motor vehicle in terms of communication, which energy management unit (18) processes the upper and/or lower limit of the supply voltage and/or the duration of a rise and/or drop in the supply voltage by actuating an energy supply management unit (20) and an energy distribution management unit (22).

15. Device according to Claim 14,
**characterized in that**
the energy supply management unit (20) is designed to set setpoint values for the current and voltage of at least one generator of the motor vehicle as a function of signals (16) of the electrical energy management unit (18).

16. Device according to Claim 14 or 15,
**characterized in that**
the energy distribution management unit (22) is designed to set which electrical loads (24, 26) can be activated, said setting being carried out as a function of signals (16) of the electrical energy management unit (18).

17. Motor vehicle having a device according to one of Claims 9 to 16.

## Revendications

1. Procédé de commande d'une tension d'alimentation qui fluctue entre une limite supérieure et une limite inférieure, dans un réseau de bord de véhicule automobile,
**caractérisé en ce que**
la limite supérieure et/ou inférieure de la tension d'alimentation du réseau de bord est réglée en fonction d'au moins une condition de fonctionnement du véhicule automobile **en ce que** la consommation électrique d'au moins un consommateur est limitée.

2. Procédé selon la revendication 1, **caractérisé en ce que** la durée d'une augmentation et/ou d'une diminution de la tension d'alimentation est en outre réglée en fonction d'au moins une condition de fonctionnement du véhicule automobile.

3. Procédé selon la revendication 1 ou 2,
**caractérisé en ce que** l'au moins une condition de fonctionnement est définie en interprétant au moins un signal de capteur (14).

4. Procédé selon la revendication 3, **caractérisé en ce que** l'au moins un signal de capteur (14) est généré par un capteur de lumière, un capteur de pluie, une horloge, un interrupteur d'éclairage à tranche horaire, un capteur de vitesse du véhicule, un ventilateur, des réglages audio, des lève-vitres électriques ou des consommateurs électriques similaires du véhicule automobile.

5. Procédé selon la revendication 3 ou 4,
**caractérisé en ce que** la limite supérieure et/ou inférieure de la tension d'alimentation et/ou la durée d'une augmentation et/ou d'une diminution de la tension d'alimentation sont déterminées en fonction d'au moins un signal de capteur (14).

6. Procédé selon la revendication 5, **caractérisé en ce qu'**un gestionnaire d'énergie (18) du véhicule automobile traite la limite supérieure et/ou inférieure de la tension d'alimentation et/ou la durée d'une augmentation et/ou d'une diminution de la tension d'alimentation **en ce qu'**il effectue une gestion de l'alimentation en énergie (20) et une gestion de la répartition d'énergie (22) dans le réseau de bord.

7. Procédé selon la revendication 6, **caractérisé en ce que** la gestion de l'alimentation en énergie (20) règle des valeurs de consigne pour le courant et la tension d'au moins un générateur du véhicule automobile.

8. Procédé selon la revendication 6 ou 7,
**caractérisé en ce que** la gestion de la répartition d'énergie (22) règle les consommateurs électriques (24, 26) qui peuvent être activés.

9. Dispositif de commande, avec une unité de commande (10), d'une tension d'alimentation qui fluctue entre une limite supérieure et une limite inférieure, dans un réseau de bord de véhicule automobile,
**caractérisé en ce que**
l'unité de commande (10) est configurée de telle sorte qu'elle règle la limite supérieure et/ou inférieure de la tension d'alimentation du réseau de bord en fonction d'au moins une condition de fonctionnement du véhicule automobile **en ce que** la consommation électrique d'au moins un consommateur est limitée.

10. Dispositif selon la revendication 9,
**caractérisé en ce que** l'unité de commande (10) est en outre configurée pour régler la durée d'une augmentation et/ou d'une diminution de la tension d'alimentation en fonction d'au moins une condition de fonctionnement du véhicule automobile.

11. Dispositif selon la revendication 9 ou 10,
**caractérisé en ce que** l'unité de commande (10) est configurée pour recevoir et interpréter au moins un signal de capteur (14) afin de définir l'au moins une condition de fonctionnement.

12. Dispositif selon la revendication 11,
**caractérisé en ce que** l'au moins un signal de capteur (14) est un signal d'un capteur de lumière, d'un capteur de pluie, d'une horloge, d'un interrupteur d'éclairage à tranche horaire, d'un capteur de vitesse du véhicule, d'un ventilateur, d'une unité audio, des lève-vitres électriques ou des consommateurs électriques similaires du véhicule automobile.

13. Dispositif selon la revendication 11 ou 12,
**caractérisé en ce que** l'unité de commande (10) est configurée pour déterminer la limite supérieure et/ou inférieure de la tension d'alimentation et/ou la durée d'une augmentation et/ou d'une diminution de la tension d'alimentation en fonction d'au moins un signal de capteur (14).

14. Dispositif selon la revendication 13,
**caractérisé en ce que** l'unité de commande (10) est reliée de manière communicante à une unité de gestion d'énergie électrique (18) du véhicule automobile qui traite la limite supérieure et/ou inférieure de la tension d'alimentation et/ou la durée d'une augmentation et/ou d'une diminution de la tension d'alimentation **en ce qu'**elle commande une unité de gestion de l'alimentation en énergie et une unité de gestion de la répartition d'énergie (20, 22).

15. Dispositif selon la revendication 14,
**caractérisé en ce que** l'unité de gestion de l'alimentation en énergie (20) est configurée pour régler des valeurs de consigne pour le courant et la tension d'au moins un générateur du véhicule automobile en fonction de signaux (16) de l'unité de gestion d'énergie électrique (18).

16. Dispositif selon la revendication 14 ou 15,
**caractérisé en ce que** l'unité de gestion de la répartition d'énergie (22) est configurée pour régler les consommateurs électriques (24, 26) qui peuvent être activés en fonction de signaux (16) de l'unité de gestion d'énergie électrique (18).

17. Véhicule automobile équipé d'un dispositif selon l'une des revendications 9 à 16.
